# EUROPÄISCHE PATENTSCHRIFT

(11) **EP 2 732 526 B1**
(45) Veröffentlichungstag und Bekanntmachung des Hinweises auf die Patenterteilung: **30.09.2015**
(21) Anmeldenummer: 12753423.8
(22) Anmeldetag: 07.08.2012
(51) Int. Cl.: H02J 3/14

(54) **NETZÜBERWACHUNGSVORRICHTUNG**
NETWORK MONITORING DEVICE
DISPOSITIF DE SURVEILLANCE DE RÉSEAU

(30) Priorität: 30.08.2011 DE 102011081766
(43) Veröffentlichungstag der Anmeldung: 21.05.2014
(73) Patentinhaber: Siemens Aktiengesellschaft, 80333 München (DE)
(72) Erfinder: KOPPMANN, Bardo, 92700 Kaltenbrunn (DE); KRÄTZSCHMAR, Andreas, 92260 Ammerthal (DE)
(86) Internationale Anmeldenummer: PCT/EP2012/065446
(87) Internationale Veröffentlichungsnummer: WO 2013/029938

(56) Entgegenhaltungen:
- JP-A- 2007 028 769
- JP-A- 2009 153 336
- JP-A- 2010 063 320
- US-A- 3 858 110

## Beschreibung

Die Erfindung betrifft eine Netzüberwachungsvorrichtung für ein Versorgungsnetz sowie ein Verfahren zum Ansteuern eines Schaltgerätes, welches die Energieversorgung eines an einem Versorgungsnetz angebundenen Verbrauchers steuern kann.

Beim Zuschalten von Motoren an ein elektrisches Versorgungsnetz treten insbesondere beim Direktstart, aber auch beim Stern-Dreieck-Start erhebliche Anlaufströme auf. Diese können beim Direktstart das sechs- bis achtfache des Motornennstroms und beim Stern-Dreieck-Start das 3,5 - 4,5-fache des Motornennstroms betragen. Bei Sanftstartern oder Frequenzumrichtern treten immerhin noch die doppelten Motorströme auf. Aber auch beim Zuschalten anderer elektrischer Verbraucher, wie z.B. von Kondensatoren in Kompensationseinrichtungen oder Beleuchtungsstraßen in Fabrikhallen, kommt es kurzzeitig zu deutlich höheren Stromaufnahmen.

Neben der Höhe dieser Ströme ist auch die Zeitdauer solcher Überlasten von Bedeutung. Diese betragen bei kapazitiven und ohmschen Lasten typisch unter 10 bis maximal 100 ms. Bei Motoren ist diese Zeitkonstante deutlich länger. Die Anlaufdauer kann im Idealfall unter 200 ms aber auch bis zu einigen 10 s betragen (Schwerstanlauf).

Beide Kerngrößen haben erheblichen Einfluss auf die Belastung des speisenden elektrischen Versorgungsnetzes sowie auf die Netzqualität des Versorgungsnetzes (Spannungseinbrüche). Insbesondere beim parallelen Zuschalten mehrerer (großer) Verbraucher kann die Einspeiseleistung des Versorgungsnetzes zu gering sein. Durch die dann auftretenden Spannungseinbrüche kann es zu Fehlzuständen von Komponenten oder zu Überlastungen kommen.

Netzversorgungen werden daher mit bestimmten Gleichzeitigkeitsfaktoren ausgelegt, welche typischerweise bei unter 80% aller Verbraucher bei Nennlast liegen.

Aus US 2011/0040666 A1 ist ein Energieverteilungsnetz bekannt, das eine Vielzahl an Verbraucherknotenpunkten aufweist und mit einer übergeordneten Instanz versehen ist, mit der die Verbraucherknotenpunkte über eine Kommunikationsschnittstelle verbunden sind. Die übergeordnete Instanz umfasst eine Statistikdatenbank, eine Ereignisdatenbank und eine Regelungsvorrichtung, in der ein Regelwerk gespeichert ist. Über die Verbraucherknotenpunkte, die beispielsweise einem Haushalt zugeordnet sind, werden der übergeordneten Instanz Informationen über elektrische Einzelverbraucher übermittelt, die zum Verbraucherknotenpunkt gehören. Diese Informationen umfassen den Strombedarf, den Betriebszustand und die voraussichtliche Betriebsdauer der Einzelverbraucher. Anhand der Informationen wird von der übergeordneten Instanz ein Steuerbefehl ermittelt, über den in den Betrieb eines elektrischen Einzelverbrauchers an einem Verbraucherknotenpunkt eingegriffen wird, so dass der Betrieb des Einzelverbrauchers an eine Vielzahl an Nutzervorgaben und externen Parametern angepasst wird.

Eine Aufgabe der vorliegenden Erfindung ist es, eine Überlastung eines Versorgungsnetzes oder von Teilen davon zu verhindern. Vorzugsweise soll eine möglichst optimale Netzqualität des Versorgungsnetzes gewährleistet werden.

Diese Aufgabe wird gelöst durch eine Vorrichtung gemäß Anspruch 1, d.h. durch eine Netzüberwachungsvorrichtung mit einer Kommunikationsvorrichtung, wobei über die Kommunikationsvorrichtung die Netzüberwachungsvorrichtung einen Schaltbefehl für ein Schaltgerät empfangen und an das Schaltgerät senden kann, wobei das Schaltgerät die Energieversorgung eines an einem Versorgungsnetz angebundenen Verbrauchers steuern kann, wobei die Netzüberwachungsvorrichtung dazu ausgebildet ist, mittels einer Messvorrichtung eine vorliegende Netzauslastung des Versorgungsnetzes zu ermitteln und in Abhängigkeit der ermittelten vorliegenden Netzauslastung einen empfangenen Schaltbefehl für das Schaltgerät, welcher zu einem erhöhten Energieverbrauch am Versorgungsnetz führen würde, zu beeinflussen, sowie durch ein Verfahren nach Anspruch 12, d.h. durch ein Verfahren zum Ansteuern eines Schaltgerätes, welches die Energieversorgung eines an einem Versorgungsnetz angebundenen Verbrauchers steuern kann, wobei eine Netzüberwachungsvorrichtung mittels einer Messvorrichtung eine vorliegende Netzauslastung des Versorgungsnetzes ermittelt und in Abhängigkeit der ermittelten vorliegenden Netzauslastung einen empfangenen Schaltbefehl für das Schaltgerät, welcher zu einem erhöhten Energieverbrauch am Versorgungsnetz führen würde, beeinflusst.

Vorteilhafte Weiterbildungen der Erfindung sind in den abhängigen Ansprüchen 2 bis 11 und 13 angegeben.

Die grundlegende Logik der Erfindung ist insbesondere wie folgt:
- Die Netzüberwachungsvorrichtung überwacht die Netzauslastung des Versorgungsnetzes indem sie die Netzauslastung vorzugsweise permanent mittels der Messvorrichtung ermittelt. Die Messvorrichtung kann Bestandteil der Netzüberwachungsvorrichtung sein, kann aber ebenso ein separates Bauteil sein, welches mit der Netzüberwachungsvorrichtung verbunden ist.
- Die Netzüberwachungsvorrichtung empfängt den Schaltbefehl (z.B. Ein- oder Ausschaltbefehl) für das einen Verbraucher steuernde Schaltgerät beispielsweise von einer übergeordneten Steuerung. Hierbei erhält die Netzüberwachungsvorrichtung den Schaltbefehl von der übergeordneten Steuerung beispielsweise direkt, d.h. mittels der Steuerspannung des Schaltgeräts, oder indirekt über eine Kommunikationsanbindung zwischen der Netzüberwachungsvorrichtung und der übergeordneten Steuerung.
- Führt der empfangene Schaltbefehl bei einer Umsetzung des Schaltbefehls an dem anzusteuernden Schaltgerät zu einem erhöhten Energieverbrauch am Versorgungsnetz, so erfolgt in Abhängigkeit der ermittelten vorliegenden Netzauslastung des Versorgungsnetzes ggf. eine Beeinflussung des empfangenen Schaltbefehls durch die Netzüberwachungsvorrichtung. Liegt eine normale Netzauslastung (keine erhöhte Netzauslastung) des Versorgungsnetzes vor, so wird der empfangene Schaltbefehl unverändert an das Schaltgerät weitergegeben, so dass die seitens der Steuerung erwünschte Schalthandlung am Schaltgerät erfolgt. Der vom Schaltgerät gesteuerte Verbraucher wird z.B. an das Versorgungsnetz zugeschaltet. Liegt hingegen eine erhöhte Netzauslastung vor, so werden durch die Netzüberwachungsvorrichtung entsprechende Maßnahmen eingeleitet, so dass es am Versorgungsnetz durch den Schaltbefehl zu keiner erhöhten Netzauslastung kommt. Der empfangene Schaltbefehl wird insbesondere seitens der Netzüberwachungsvorrichtung beeinflusst. Hierbei wird beispielsweise durch die Netzüberwachungsvorrichtung der empfangene Schaltbefehl für das Schaltgerät abgewiesen (d.h. nicht an das Schaltgerät weitergegeben), so dass es zu keiner Zustandsänderung am Schaltgerät kommt und folglich kein erhöhter Energieverbrauch am Versorgungsnetz entsteht. Ebenso ist es denkbar, dass beispielsweise die Ausgabe des empfangenen Schaltbefehls an das Schaltgerät zeitlich verzögert wird. Der Schalbefehl wird vorzugsweise erst dann an das Schaltgerät ausgegeben, wenn durch die Umsetzung des Schaltbefehls an dem Schaltgerät keine erhöhte Netzauslastung am Versorgungsnetz herbeigeführt wird. Es kommt somit durch die zeitlich versetzte Ansteuerung des Schaltgerätes durch die Netzüberwachungsvorrichtung zu einer zeitlich versetzten Belastung des Versorgungsnetzes durch den vom Schaltgerät angesteuerten Verbraucher. Die Netzüberwachungsvorrichtung meldet vorzugsweise daraufhin den Status des Schaltbefehls (ausgeführt, zeitlich verzögert, nicht ausgeführt, etc.) an die übergeordnete Steuerung zurück.

Für die Netzüberwachungsvorrichtung sind bei Vorliegen eines Schaltbefehls für ein Schaltgerät, welches zu einem erhöhten Energieverbrauch eines Verbrauchers führen würde, in Abhängigkeit des ermittelten Auslastungsgrades des Versorgungsnetzes (Netzauslastung) insbesondere folgende Funktionsumfänge denkbar:
a) Anhand der ermittelten Netzauslastung wird der Schaltbefehl für das Schaltgerät durch die Netzüberwachungsvorrichtung beeinflusst oder nicht. Es erfolgt insbesondere eine Freigabe, ein Verzögern oder ein Abweisen des Schaltbefehls für das Schaltgerät durch die Netzüberwachungsvorrichtung.
b) Bei der Freigabe oder dem Verzögern des Schaltbefehls wird die zu erwartenden zusätzlichen Netzbelastung durch den Hochlauf, das direkte Einschalten und/oder den Dauerbetrieb berücksichtigt.
c) Es erfolgt eine Priorisierung von Zu- und Abschaltbefehlen in Abhängigkeit der Verbraucherpriorität und/oder des Schaltzustands der Verbraucher am Versorgungsnetz.

Für alle 3 Funktionsumfänge (a-c) muss zumindest die Netzüberwachungsvorrichtung für seinen Netzknotenpunkt (Messpunkt) die maximale Netzbelastbarkeit kennen. Für die Funktionsumfänge b und/oder c sind weitere Informationen über die am Versorgungsnetz angeschlossenen Verbraucher erforderlich (z.B. Anlaufstrom, Anlaufzeit, Nennbetriebsstrom und/oder Wichtigkeit des Verbrauchers). Diese Informationen sind vorzugsweise in der Netzüberwachungsvorrichtung hinterlegt. Vorzugsweise können die genannten Informationen direkt in die Netzüberwachungsvorrichtung eingegeben werden oder werden von einer übergeordneten Steuerung (z.B. SPS) beispielsweise über eine Busankopplung an die Netzüberwachungsvorrichtung übermittelt. Das energetische Verbrauchsverhalten der Verbraucher kann somit in der Netzüberwachungsvorrichtung hinterlegt werden. Ferner ist vorzugsweise in der Netzüberwachungsvorrichtung hinterlegt, welches Schaltgerät welchen Verbraucher steuert, so dass ein gezieltes Ansteuern der Verbraucher und somit ein gezieltes steuern der Netzauslastung durch die Netzüberwachungsvorrichtung möglich ist.

Durch das Schaltgerät wird insbesondere die Energiezufuhr des vom Versorgungsnetz mit Energie zu versorgenden Verbrauchers gesteuert, so dass der Energieverbrauch innerhalb des Versorgungsnetzes durch das Schaltgerät beeinflussbar ist. Das Schaltgerät ist beispielsweise ein Schütz, ein Sanftstarter oder ein Frequenzumrichter. Das Schaltgerät ist vorzugsweise der Messvorrichtung der Netzüberwachungsvorrichtung nachgeschaltet.

Mittels der Netzüberwachungsvorrichtung kann somit gezielt in Abhängigkeit der vorliegenden Netzauslastung des Versorgungsnetzes der Energieverbrauch eines Verbrauchers über dessen Schaltgerät gesteuert werden. Bei vorliegen einer erhöhten Netzauslastung des Versorgungsnetzes wird vorzugsweise von der Netüberwachungsvorrichtung empfangene Schaltbefehl für den Verbraucher beeinflusst. Liegt eine normale Netzauslastung vor, so wird vorzugsweise der empfangene Schaltbefehl nicht beeinflusst und folglich für das Schaltgerät von der Netzüberwachungsvorrichtung freigegeben.

In einer vorteilhaften Ausführungsform können mittels der Netzüberwachungsvorrichtung die jeweiligen Schaltbefehle mehrere mit ihr verbundenen Schaltgeräte gezielt in Abhängigkeit der vorliegenden Netzauslastung beeinflusst werden. Durch die Schaltgeräte kann beispielsweise lediglich die Energieversorgung eines Verbrauchers gesteuert werden. Es ist aber ebenso denkbar, dass mittels mehrerer Schaltgeräte mehrere am Versorgungsnetz angeschlossene Verbraucher gesteuert werden. Auf diese Weise kann ein optimiertes Zuschaltverhalten der Verbraucher an das Versorgungsnetz uns somit eine optimierte Netzauslastung des Versorgungsnetzes erfolgen.

Da die Netzüberwachungsvorrichtung mittels der Messvorrichtung die aktuell vorliegende Netzauslastung des Versorgungsnetzes ermitteln kann, kann vorzugsweise bei einem Zuschalten eines Verbrauchers mittels eines über die Netzüberwachungsvorrichtung gesteuerten Schaltgerätes kontrolliert werden, ob dies zu einer Überlast am Versorgungsnetz führt oder nicht. Würde das Zuschalten des Verbrauchers an das Versorgungsnetz zu einer Überlast führen, so können gezielt durch die Netzüberwachungsvorrichtung entsprechende Gegenmaßnahmen eingeleitet werden. Es kann vorzugsweise das Zuschalten des Verbrauchers an das Versorgungsnetz zeitlich verzögert werden (bis eine Überlast durch den Schaltvorgang am Versorgungsnetz ausgeschlossen werden kann), das Zuschalten kann unterbunden werden oder ein anderer Verbraucher kann vor dem Zuschalten des Verbrauchers durch die Netzüberwachungsvorrichtung vom Versorgungsnetz genommen werden. Die Netzüberwachungsvorrichtung kann somit in Abhängigkeit der von ihr ermittelten vorliegenden Netzauslastung Maßnahmen einleiten, welche eine Überlastung des vorliegenden Versorgungsnetzes verhindern.

Die Netzüberwachungsvorrichtung unterscheidet vorzugsweise zwischen einer normalen Netzauslastung und einer erhöhten Netzauslastung. Bei einer erhöhten Netzauslastung liegt vorzugsweise eine Netzauslastung größer 70% der zulässigen angegebenen Netzbelastbarkeit des Versorgungsnetzes vor. Bei einer normalen Netzauslastung befindet man sich folglich im Bereich kleiner 70% der zulässigen angegebenen Netzbelastbarkeit des Versorgungsnetzes.

Bei einer erhöhten Netzauslastung würde die Netzüberwachungsvorrichtung an das den Verbraucher steuernde Schaltgerät beispielsweise ein empfangenen Schaltbefehl (z.B. Zuschalten des Verbrauchers) derart abändern und ausgeben, dass mittels des ausgegeben Schaltbefehls kein sofortiges Zuschalten des Verbrauchers erfolgt, sondern ein zeitlich verzögertes Zuschalten des Verbrauchers mittels des Schaltgerätes erfolgt oder das Zuschalten des Verbrauchers unterbleibt. Ebenso ist es denkbar, dass bei Vorliegen einer erhöhten Netzauslastung vor einem Zuschalten des anzusteuernden Verbrauchers durch die Netzüberwachungsvorrichtung ein Schalbefehl an ein einen anderen Verbraucher steuerndes Schaltgerät ausgegeben wird, so dass der andere Verbraucher zunächst Energieressourcen freigibt (er wird z.B. abgeschaltet), bevor der erste Verbraucher zugeschaltet wird. Es kommt somit zunächst zu einer Reduzierung der Netzauslastung durch eine gezielte Ansteuerung eines anderen Schaltgerätes durch die Netzüberwachungsvorrichtung bevor das zu schaltende Schaltgerät durch die Netzüberwachungsvorrichtung angesteuert wird. Durch die Ansteuerung des anderen Schaltgerätes wird insbesondere die Netzauslastung derart abgesenkt, so dass es durch das anschließende Umsetzen des Schaltbefehls für das anzusteuernde Schaltgerät zu keiner erhöhten Netzauslastung kommt. Dies kann beispielsweise ebenso durch ein gezieltes Abschalten mehrere Verbraucher und somit durch ein gezieltes Ansteuern mehrerer andere Schaltgeräte durch die Netzüberwachungsvorrichtung erfolgen. Bei dem gezielten Abschalten von Verbrauchern werden insbesondere Verbraucher abgeschaltet, dessen Verfügbarkeit für den Anwender und/oder das Gesamtsystem nicht essentiell sind. Mittels einer derartigen Netzüberwachungsvorrichtung kann somit ein Versorgungsnetz derart überwacht werden, dass beim Zuschalten von Lasten an dieses Versorgungsnetz Netzüberlastungen vermieden werden können. Durch die Überwachung der vorliegenden Netzauslastung kann somit eine verbesserte Netzqualität im Versorgungsnetz erreicht werden. Ferner kann durch die gezielt Überwachung der vorliegenden Netzauslastung durch die Netzüberwachungsvorrichtung eine sehr hohe Auslastung der Netzversorgung erreicht werden.

Der empfangene Schaltbefehl stammt vorzugsweise von einer übergeordneten Steuerung und wird vorzugsweise mittels einer Busverbindung zwischen der Steuerung und der Netzüberwachungsvorrichtung von der Steuerung an die Netzüberwachungsvorrichtung übertragen. Ebenso ist es denkbar, dass von der Steuerung die Steuerspannung für das Schaltgerät als Schaltbefehl übertragen wird und diese Steuerspannung für das Schaltgerät seitens der Netzüberwachungsvorrichtung beeinflussbar ist.

In einer weiteren vorteilhaften Ausführungsform der Erfindung ist mittels der Kommunikationsvorrichtung das Schaltgerät unmittelbar steuerbar und/oder die ermittelte vorliegende Netzauslastung ist an das Schaltgerät übertragbar. Über die Kommunikationsvorrichtung ist die Netzüberwachungsvorrichtung mit dem Schaltgerät verbindbar, so dass hierüber eine Ausgabe eines Schaltbefehls an das Schaltgerät erfolgen kann. Die Netzüberwachungsvorrichtung kann bei dem unmittelbaren Steuern des Schaltgeräts einen von einer Steuerung für das Schaltgerät an die Netzüberwachungsvorrichtung gesandten Schaltbefehl empfangen und unverändert weitergeben. Liegt jedoch eine erhöhte Netzauslastung vor, so kann die Netzüberwachungsvorrichtung den empfangenen Schaltbefehl beeinflusst an das Schaltgerät ausgeben. Es ist ebenso denkbar, dass seitens der Netzüberwachungsvorrichtung die ermittelte vorliegende Netzauslastung an das Schaltgerät ausgegeben wird, so dass hierüber ein Beeinflussen des Schaltbefehls für das anzusteuernde Schaltgerät erfolgt.

Bei dem unmittelbaren Steuern des Schaltgerätes sind vorzugsweise in der Netzüberwachungsvorrichtung alle wesentlichen von der Netzüberwachungsvorrichtung beeinflussbaren elektrischen Verbraucher des Versorgungsnetzes (vorzugsweise auch mit ihrer Anlaufcharakteristik) hinterlegt. Ferner ist der Netzüberwachungsvorrichtung vorzugsweise bekannt, welchen Verbraucher das jeweilig mit der Netzüberwachungsvorrichtung verbundene Schaltgerät steuert. Die Netzüberwachungsvorrichtung kann somit mittels einer Logikeinheit, welcher die vorliegende Netzauslastung sowie charakterisierende Verbrauchswerte des angesteuerten Verbrauchers vorliegen, entscheiden ob ein an das Versorgungsnetz zu schaltender Verbraucher aus Sicht der vorliegenden Netzauslastung mittels des zugehörigen Schaltgerätes zugeschaltet werden kann, oder nicht. Liegt eine normale Netzauslastung vor, so kann der Verbraucher zugeschaltet werden. Es wird folglich der empfangene Schaltbefehl an das zu schaltende Schaltgerät unverändert weitergegeben, so dass der der Verbraucher an das Versorgungsnet zugeschaltet wird. Liegt hingegen eine erhöhte Netzauslastung am Versorgungsnetz vor, so kann die Logikeinheit der Netzüberwachungsvorrichtung den empfangenen Schaltbefehl für das Schaltgerät derart abändern (beeinflussen), dass beispielsweise eine zeitliche Verzögerung des Zuschaltvorgangs des zu schaltenden Verbrauchers stattfindet, kein Zuschalten des zu schaltenden Verbrauchers stattfindet und/oder vor dem Zuschalten des Verbrauchers ein anderer Verbraucher mittels eines anderen über die Netzüberwachungsvorrichtung gesteuerten Schaltgerätes vom Versorgungsnetz genommen wird bzw. der Energieverbrauch des Verbrauchers reduziert wird. Es ist ebenso denkbar, dass mittels der Netzüberwachungsvorrichtung bei einer hohen Auslastung des Versorgungsnetzes gezielt mehrere Verbraucher durch deren Schaltgeräte vom Versorgungsnetz genommen werden bzw. der Energieverbrauch dieser Verbraucher reduziert wird. Hierfür würde die Netzüberwachungsvorrichtung ein Schaltbefehl an die betroffenen Schaltgeräte der Verbraucher senden.

Bei dem unmittelbaren Steuern des Schaltgerätes wird der Schaltbefehl (Zuschalten/Abschalten) für das zu steuernde Schaltgerät unmittelbar von der Netzüberwachungsvorrichtung über deren Kommunikationsvorrichtung an das zu steuernde Schaltgerät ausgegeben. Technisch gibt es hierbei insbesondere folgende Möglichkeiten:
a) Die Netzüberwachungsvorrichtung funktioniert "nur" als "Zwischenrelais", d.h. ein Ansteuersignal der übergeordneten Steuerung kommt direkt an der Netzüberwachungsvorrichtung an (empfangener Schaltbefehl). Dieses Ansteuersignal wird in der Netzüberwachungsvorrichtung in Abhängigkeit der vorliegenden Netzauslastung zum Schaltgerät/Verbraucher weitergeleitet, verzögert oder unterbunden.
b) Die Netzüberwachungsvorrichtung erhält ein Steuersignal von der Steuerung mittels einer Kommunikationsanbindung zwischen der Steuerung und der Netzüberwachungsvorrichtung (empfangener Schaltbefehl). Die Netzüberwachungsvorrichtung schickt drauf hin in Abhängigkeit der vorliegenden Netzauslastung über deren Kommunikationsvorrichtung ein Ansteuersignal (Schaltbefehl) zum Schaltgerät. D.h. die Netzüberwachungsvorrichtung übernimmt zugleich die Aufgabe von Hilfsschützen (Umwandlung von Logiksignalen in Ansteuersignale mit einer gewissen Ansteuerleistung von einigen (ca. zehn) Watt).
c) Die Netzüberwachungsvorrichtung erhält Steuersignale von der Steuerung mittels einer Kommunikationsanbindung zwischen der Steuerung und der Netzüberwachungsvorrichtung (empfangener Schaltbefehl). Die Netzüberwachungsvorrichtung schickt drauf hin in Abhängigkeit der vorliegenden Netzauslastung über deren Kommunikationsvorrichtung ein Steuersignal zum Schaltgerät (Schaltbefehl). Vorzugsweise erfolgt die Kommunikation zwischen der Netzüberwachungsvorrichtung und der Steuerung und dem/den Schaltgerät/en mittels einer Busverbindung. Es werden folglich lediglich Logiksignale verarbeitet.

Alternativ zur unmittelbaren Steuerung eines mit der Netzüberwachungsvorrichtung verbundenen Schaltgerätes kann durch die Netzüberwachungsvorrichtung die ermittelte vorliegende Netzauslastung an das zu steuernden Schaltgerät oder die zu steuernde Schaltgeräte übertragen werden. Da die Netzüberwachungsvorrichtung vorzugsweise mit mehreren am Versorgungsnetz angeschlossenen Schaltgeräten verbunden ist, können durch das Übertragen der vorliegenden Netzauslastung die Schaltgeräte autark in Abhängigkeit der vorliegenden Netzauslastung des Versorgungsnetzes den durch das Schaltgerät gesteuerten Verbraucher ansteuern. Liegt eine erhöhte Netzauslastung vor, so können beispielsweise entbehrbare Verbraucher (z.B. Klimatisierung einer Werkshalle) automatisch durch deren Schaltgerät vom Versorgungsnetz genommen werden, so dass die Netzauslastung reduziert wird. Liegt wieder eine normale Netzauslastung vor, so können die Verbraucher automatisch wieder durch deren Schaltgeräte an das Versorgungsnetz zugeschaltet werden. Vorzugsweise werden bei einer kritischen Netzauslastung des Versorgungsnetzes verzichtbare Verbraucher mit hohen Auslastungsgraden vom Netz genommen. Wird beispielsweise durch die Netzüberwachungsvorrichtung ein Schaltbefehl einer Steuerung unverändert an ein Schaltgerät weitergegeben und zusätzlich an das Schaltgerät ein eine erhöhte Netzauslastung charakterisierendes Signal ausgegeben, so kann das Schaltgerät derart seitens des Anwenders parametriert sein, dass der Schaltbefehl bei vorliegen einer erhöhten Netzauslastung vollständig ignoriert wird. Es kommt somit zu keiner Umsetzung des Schaltbefehls am Verbraucher des Schaltgerätes, so dass der Schaltbefehl der übergeordneten Steuerung seitens der Netzüberwachungsvorrichtung beeinflusst wurde.

In einer weiteren vorteilhaften Ausführungsform der Erfindung ist die Netzüberwachungsvorrichtung dazu ausgebildet, einen mit der Messvorrichtung ermittelten Wert mit einem in der Netzüberwachungsvorrichtung hinterlegten Referenzwert zu vergleichen, so dass die vorliegende Netzauslastung des Versorgungsnetzes ermittelt werden kann. Der Referenzwert kann beispielsweise seitens des Anwenders eingegeben oder durch eine Busankopplung von einer übergeordneten Steuerung an die Netzüberwachungsvorrichtung übertragen werden. Der Referenzwert charakterisiert vorzugsweise den Schwellwert zwischen der normalen Netzauslastung und der erhöhten Netzauslastung des Versorgungsnetzes. Ferner wird vorzugsweise ebenso durch den Referenzwert die maximal zulässige Netzbelastbarkeit des Versorgungsnetzes angegeben. Mittels des Referenzwertes und des durch die Messvorrichtung ermittelten Wertes kann somit ein Rückschluss auf die vorliegende Netzauslastung erfolgen. In Abhängigkeit der ermittelten vorliegenden Netzauslastung kann somit das für das Schaltgerät empfangene Schaltsignal seitens der Netzüberwachungsvorrichtung beeinflusst werden.

Durch den Vergleich des ermittelten Wertes mit dem Referenzwert kann die Netzauslastung des Versorgungsnetzes in mehrere Kategorien unterteilt werden, z.B. kritische Netzauslastung (> 90% der zulässigen angegebenen Netzbelastbarkeit des Versorgungsnetzes), erhöhte Netzauslastung (z.B. 90 bis 70% der zulässigen angegebenen Netzbelastbarkeit des Versorgungsnetzes) und normale Netzauslastung (z.B. < 70% der zulässigen angegebenen Netzbelastbarkeit des Versorgungsnetzes). Anhand derartiger Kategorien kann ein gezieltes Ansteuern bestimmter Verbraucher des Versorgungsnetzes erfolgen. Bei einer erhöhten oder kritischen Netzauslastung des Versorgungsnetzes werden beispielsweise bestimmte Verbraucher nicht oder zeitverzögert durch die Netzüberwachungsvorrichtung zugeschaltet. Ebenso ist es denkbar das bestimmte Verbraucher durch die Netzüberwachungsvorrichtung gezielt abgeschaltet werden. Das Zuschalten oder Abschalten der Verbraucher erfolgt über die Schaltgeräte (z.B. Schütze, Sanftstarter, Frequenzumrichter), welche mit der Netzüberwachungsvorrichtung verbunden sind.

Mittels der Netzüberwachungsvorrichtung kann die vorliegende Netzauslastung insbesondere in zwei aber auch in mehrere Kategorien untergliedert werden. In Abhängigkeit der jeweiligen Kategorie (z.B.: kritische Netzauslastung, erhöhte Netzauslastung und normale Netzauslastung) kann die Beeinflussung des empfangenen Schaltbefehls durch die Netzüberwachungsvorrichtung unterschiedlich ausfallen, so dass eine stabile Energieversorgung mittels des Versorgungsnetzes gewährleistet werden kann und insbesondere eine Überlast verhindert wird. Während der normalen Netzauslastung entspricht der empfangene Schaltbefehl insbesondere dem, welcher von der Netzüberwachungsvorrichtung an das Schaltgerät gesendeten wird. Während der kritischen oder erhöhten Netzauslastung wird der empfangene Schaltbefehl insbesondere zeitlich verzögert (vorzugsweise bis vorliegen einer normalen Netzauslastung) an das Schaltgerät weitergeleitet, so dass dieser beeinflusst wird.

In einer weiteren vorteilhaften Ausführungsform der Erfindung ist die Netzüberwachungsvorrichtung derart ausgebildet ist, dass bei vorliegen des Schaltbefehls für das Schaltgerät ein weiters mit der Netzüberwachungsvorrichtung verbundene Schaltgerät derart angesteuert werden kann, dass der Energieverbrauch eines vom weiteren Schaltgerät angesteuerten Verbrauchers an dem Versorgungsnetz reduziert wird.

In einer weiteren vorteilhaften Ausführungsform der Erfindung sind in der Netzüberwachungsvorrichtung Verbrauchswerte mehrerer Verbraucher hinterlegt. Eine Logikeinheit der Netzüberwachungsvorrichtung kann somit auf Basis der vorliegenden Netzauslastung und der hinterlegten Verbrauchswerte der am Versorgungsnetz angeschlossenen Verbraucher analysieren, ob durch eine Ansteuerung eines Verbrauchers mittels dessen Schaltgerät eine Überlast am Versorgungsnetz entstehen kann. Vorzugsweise wird durch einen hinterlegten Verbrauchswert eines Verbrauchers der Energieverbrauch des Verbrauches sowohl während seines Einschaltvorgangs, Hochlaufvorgangs, und/oder während seines Dauerbetrieb charakterisieret. Die Netzüberwachungsvorrichtung kann folglich bei vorliegen einer kritischen oder erhöhten Netzauslastung des Versorgungsnetzes eine gezielte Ansteuerung der über das Versorgungsnetz mit Energie zu versorgenden Verbraucher mittels einer Ansteuerung deren Schaltgeräte durchführten.

In einer weiteren vorteilhaften Ausführungsform der Erfindung umfasst eine speicherprogrammierbare Steuerung (SPS) eine Netzüberwachungsvorrichtung. Die Netzüberwachungsvorrichtung ist somit in einer Steuerung (SPS) integriert, mittels welcher die Ansteuerung eines oder mehrerer Schaltgeräte erfolgen kann.

In einer weiteren vorteilhaften Ausführungsform der Erfindung umfasst ein Versorgungssystem ein Versorgungsnetz, mindestens ein Schaltgerät und eine Netzüberwachungsvorrichtung, wobei die Netzüberwachungsvorrichtung mittels der Messvorrichtung die vorliegende Netzauslastung an einem ersten Messpunkt des Versorgungsnetzes ermitteln kann und in Abhängigkeit der ermittelten vorliegenden Netzauslastung am ersten Messpunkt einen Schaltbefehl für das Schaltgerät, welcher zu einem erhöhten Energieverbrauch am Versorgungsnetz führen würde, beeinflussen kann.

In einer weiteren vorteilhaften Ausführungsform der Erfindung ist das Schaltgerät in Bezug auf den ersten Messpunkt am Versorgungsnetz nachgeschaltet.

In einer weiteren vorteilhaften Ausführungsform der Erfindung sind zwei Schaltgeräte am Versorgungsnetz angeschlossen, wobei die Netzüberwachungsvorrichtung aufgrund eines Schaltbefehls für eines der Schaltgeräte in Abhängigkeit der ermittelten vorliegenden Netzauslastung des Versorgungsnetzes den vorliegenden Schaltzustand beider Schaltgeräte beeinflussen kann.

In einer weiteren vorteilhaften Ausführungsform der Erfindung umfasst das Versorgungssystem eine weitere Netzüberwachungsvorrichtung, welche an einem zweiten Messpunkt des Versorgungsnetzes die vorliegende Netzauslastung ermitteln kann. Die weitere Netzüberwachungsvorrichtung kann somit die Energieversorgung der dem zweiten Messpunkt nachgeschalteten Verbraucher gezielt über deren Schaltgeräte steuern. Der zweite Messpunkt am Versorgungsnetz ist ein anderer Messpunkt als der erste Messpunkt am Versorgungsnetz und weist eine andere Netzauslastung des Versorgungsnetzes auf. Vorzugsweise kann die Netzüberwachungsvorrichtung ebenso der weiteren Netzüberwachungsvorrichtung die am ersten Messpunkt vorliegende Netzauslastung übermitteln und/oder die Netzauslastung am zweiten Messpunkt von der weiteren Netzüberwachungsvorrichtung empfangen, so dass eine weiterführende Analyse erfolgen kann.

Eine spezifische Überwachung unterschiedlicher Knotenpunkte (Messpunkte) eines Versorgungsnetzes kann somit erfolgen. Beispielsweise kann eine untergeordnete Netzüberwachungsvorrichtung auch als "Schaltgerät" interpretiert und somit von der übergeordneten Netzüberwachungsvorrichtung gesteuert werden. Hieraus ergibt sich die Möglichkeit kaskadierte Systeme aufzubauen.

Die Anbindung der Netzüberwachungsvorrichtungen untereinander sowie an die die Verbraucher schaltenden Schaltgeräte kann unterschiedlich erfolgen. Die Netzüberwachungsvorrichtung kann beispielsweise mittels einer Direktverdrahtung mit den zu steuernden Schaltgeräten bzw. einer weiteren Netzüberwachungsvorrichtung verbunden sein. Ebenso ist es denkbar, dass über ein Bussystem (AS-i, IO-Link, Profibus, etc.) eine Kommunikation zwischen den Netzüberwachungsvorrichtungen und deren Schaltgeräten erfolgt. Ferner ist es denkbar, dass die Kommunikation der Netzüberwachungsvorrichtung mittels einer Aufmodulierung der Information auf die Hauptstrombahn (gegebenenfalls auch redundant auf alle drei Phasen) des Versorgungsnetzes erfolgt. Der von der Netzüberwachungsvorrichtung an das Schaltgerät ausgegebne Schaltbefehl wird somit auf die Hauptstrombahn des Versorgungsnetzes aufmoduliert. Das den Verbraucher schaltende Schaltgerät kann den aufmodulierten Schaltbefehl aus dem Versorgungsnetz herausfiltern, so dass eine Signalübertragung zwischen der Netzüberwachungsvorrichtung und dem Schaltgerät erfolgen kann. Vorgeschaltete, aber offene Schaltgeräte, würden zwar den Kommunikationsweg unterbrechen, dies würde aber die Funktionalität nicht einschränken, da nachfolgende Schaltgerät nicht eingeschaltet werden können bzw. nicht ausgeschaltet werden müssen. Eine unerwünschte Erhöhung der Netzauslastung kann somit nicht erfolgen.

Sofern das Schaltgerät eine Logikeinheit umfasst, so kann mittels der Netzüberwachungsvorrichtung lediglich ein Logiksignal als Schaltbefehl an das Schaltgerät übertragen werden. Die Auswertung dieses Logiksignals erfolgt in dem Schaltgerät selbst. Hierbei sind beispielsweise folgende Szenarien denkbar:
a) Die Logikeinheit des Schaltgeräts erhält als Logiksignal ein EIN- oder AUS-Signal (Schaltbefehl) von der Netzüberwachungsvorrichtung. Die Logikeinheit des Schaltgeräts steuert hierauf seine Hilfsspannungsversorgung, so dass hierüber der Verbraucher gesteuert wird.
b) Die Logikeinheit des Schaltgeräts erhält als Logiksignal ein kodiertes Signale (z.B. ON in 5sec). Das heißt in der Netzüberwachungsvorrichtung wird entschieden und die Entscheidung wird an das Schaltgerät übermittelt. Erst im Schaltgerät erfolgt das abarbeitet des Schaltbefehls (offene Steuerung).

Liegt eine erhöhte Netzauslastung am Versorgungsnetz vor, so wird vorzugsweise durch die Netzüberwachungsvorrichtung automatisch das Zuschalten des Verbrauchers am Versorgungsnetz verzögert, unterbunden und/oder es wird durch die Netzüberwachungsvorrichtung automatisch ein weiters Schaltgerät angesteuert, so dass durch das weitere Schaltgerät eine über das Versorgungsnetz erfolgende Energiezufuhr für einen Verbraucher beendet/reduziert wird. Ein derartiger Verbraucher ist vorzugsweise ein Verbraucher dessen Verfügbarkeit nicht essentiell ist.

In einer vorteilhaften Ausführungsform überprüft die Netzüberwachungsvorrichtung vor dem Schalten eines Schaltgerätes ob das Umsetzen des empfangenen Schaltbefehls am Schaltgerät am Versorgungsnetz zu einer erhöhten Netzauslastung führen würde oder nicht. Würde durch das Umsetzen des empfangenen Schaltbefehls am Schaltgerät eine erhöhte Netzauslastung vorliegen, so werden durch die Netzüberwachungsvorrichtung entsprechende Maßnahmen eingeleitet, so dass es am Versorgungsnetz durch den Schaltbefehl zu keiner erhöhten Netzauslastung kommt (z.B. Schaltbefehl ignorieren, Schaltbefehl verzögern, Energieverbrauch eines anderen Verbraucher reduzieren).

Im Folgenden werden die Erfindung und Ausgestaltungen der Erfindung anhand der in den Figuren dargestellten Ausführungsbeispiele näher beschrieben und erläutert. Es zeigen:
- FIG 1: einen schematischen Aufbau eines Versorgungssystems mit einer ersten und einer zweiten Netzüberwachungsvorrichtung, wobei die Netzüberwachungsvorrichtungen mittels einer Direktverdrahtung mit Schaltgeräten verbunden sind und
- FIG 2: einen schematischen Aufbau eines Versorgungssystems mit einer ersten und einer zweiten Netzüberwachungsvorrichtung, wobei die Netzüberwachungsvorrichtungen mittels eines Kommunikationsbusses mit Schaltgeräten verbunden sind.

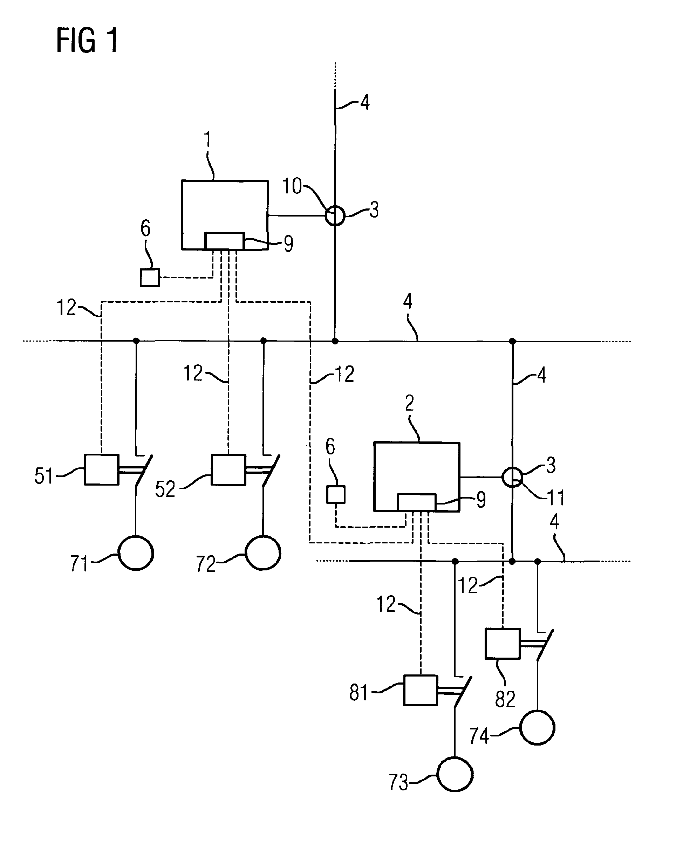

FIG 1 zeigt einen schematischen Aufbau eines Versorgungssystems mit einer ersten und einer zweiten Netzüberwachungsvorrichtung 1,2, wobei die Netzüberwachungsvorrichtungen 1,2 mittels einer Direktverdrahtung 12 mit Schaltgeräten 51,52, 81,82 verbunden sind. Die Übertragung eines Schaltbefehls von der Netzüberwachungsvorrichtung 1,2 an ein ihr zugeordnetes Schaltgerät 51,52,81,82 erfolgt folglich über die Direktverdrahtung 12. In diesem Ausführungsbeispiel sind vier Verbraucher 71,72,73,74 an das Versorgungsnetz 4 angeschlossen. Die einzelnen Verbraucher 71,72,73,74 weisen jeweils ein Schaltgerät 51,52,81,82 auf, mittels welchem die Energiezufuhr zum Versorgungsnetz 4 hergestellt bzw. unterbunden werden kann. Hierfür schließen bzw. öffnen die jeweiligen Schaltgeräte 51,52,81,82 die Versorgungsleitung 4 zum entsprechenden Verbraucher 71,72,73,74. Die Schaltgeräte 51,52,81,82 können somit ihren zugehörigen Verbraucher 71,72,73,74 an das Versorgungsnetz 4 zuschalten bzw. es vom Versorgungsnetz nehmen. Die Schaltgeräte 51,52,81,82 sind beispielsweise Sanftstarter und/oder Frequenzumrichter. In Abhängigkeit der Anzahl sowie des Typs der zugeschalteten Verbraucher 71,72,73,74 am Versorgungsnetz können unterschiedliche Netzauslastungen am Versorgungsnetz 4 entstehen.

Die Verbraucher 71,72,73,74 sind insbesondere Komponenten einer industriellen Anlage, welche Energie aus einem Versorgungsnetz 4 benötigen. Die Verbraucher 71,72,73,74 sind beispielsweise Beleuchtungssysteme, Klimaanlagen von Werkshallen, Stanzmaschinen, Fertigungsstraßen oder einzelne Elektromotoren. Um auf unterschiedliche Netzauslastungen des Versorgungsnetzes 4 reagieren zu können, umfasst das Versorgungssystem die erste Netzüberwachungsvorrichtung 1 und die zweite Netzüberwachungsvorrichtung 2. Die erste Netzüberwachungsvorrichtung 1 kann mittels einer Messvorrichtung 3 an einem ersten Messpunkt 10 (Knotenpunkt) des Versorgungsnetzes 4 eine vorliegende Netzauslastung des Versorgungsnetzes 4 am ersten Messpunkt 10 ermitteln. Die zweite Netzüberwachungsvorrichtung 2 kann ebenso eine Ermittlung der Netzauslastung des Versorgungsnetzes 4 an einem zweiten Messpunkt 11 mittels einer ihr zugeordneten Messvorrichtung 3 durchführen. Die erste Netzüberwachungsvorrichtung 1 kann somit erkennen, ob das Versorgungsnetz 4 am ersten Messpunkt 10 eine normale Netzauslastung (z.B. < 70% der zulässigen maximalen Netzauslastung des Versorgungsnetzes) aufweist oder eine erhöhte Netzauslastung (z.B. > 70% der zulässigen maximalen Netzauslastung des Versorgungsnetzes) vorliegt. Die zweite Netzüberwachungsvorrichtung 2 kann ebenso erkennen, ob das Versorgungsnetz 4 am zweiten Messpunkt 11 eine normale Netzauslastung (z.B. < 70% der zulässigen maximalen Netzauslastung des Versorgungsnetzes) aufweist oder eine erhöhte Netzauslastung (z.B. > 70% der zulässigen maximalen Netzauslastung des Versorgungsnetzes) vorliegt. Zur Unterscheidung zwischen der normalen Netzauslastung und der erhöhten Netzauslastung ist in der jeweiligen Netzüberwachungsvorrichtung 1,2 ein Referenzwert hinterlegt, so dass durch einen Vergleich der ermittelten Netzauslastung des Versorgungsnetzes 4 mit dem Referenzwert erkannt wird, ob eine normale Netzauslastung oder eine erhöhte Netzauslastung am jeweiligen Messpunkt 10,11 des Versorgungsnetzes 4 vorliegt. Dieser Referenzwert kann vorzugsweise seitens eines Anwenders an der Netzüberwachungsvorrichtung 1,2 eingestellt werden. Dies kann beispielsweise die maximale zulässige Netzauslastung des Versorgungsnetzes 4 sowie ein prozentualer Wert hierzu sein, welcher angibt, ab welchem Zeitpunkt eine normale Netzauslastung und ab welchem eine erhöhte Netzauslastung am Versorgungsnet 4 vorliegt. Es ist ebenso denkbar, dass mehrere Kategorien hinsichtlich der Netzauslastung gebildet werden, so dass schrittweise energiesparende Maßnahmen eingeleitet werden können. Es kann beispielsweise eine weitere Netzauslastungszustand definiert werden, welcher einen kritische Netzauslastung (z.B. > 90% der zulässigen maximalen Netzauslastung des Versorgungsnetzes 4) angibt.

In diesem Ausführungsbeispiel sind die Netzüberwachungsvorrichtungen 1,2 jeweils mit einer separaten Steuerung 6 verbunden. Es ist ebenso denkbar, dass die beiden Netzüberwachungsvorrichtungen 1,2 lediglich mit einer Steuerung 6 verbunden sind. Die jeweilige Steuerung 6 kann an ihre zugehörige Netzüberwachungsvorrichtung 1,2 einen Schaltbefehl für ein anzusteuerndes Schaltgerät 51,52,81,82 ausgeben. Durch eine Ansteuerung des entsprechenden Schaltgerätes 51,52,81,82 kann letztendlich dessen Verbraucher 71,72,73,74 gesteuert werden.

Bei einer erwünschten Ansteuerung eines der Schaltgeräte 51,52,81,82 gibt die Steuerung 6 zunächst einen Schaltbefehl für das entsprechende Schaltgerät 51,52,81,82 an die Netzüberwachungsvorrichtung 1,2 aus. Der Schaltbefehl der Steuerung 6 wird über die zugehörige Netzüberwachungsvorrichtung 1,2 geleitet, so dass die Netzüberwachungsvorrichtung 1,2 in Abhängigkeit der vorliegenden Netzauslastung diesen Schaltbefehl beeinflussen kann oder nicht.

Zur Kommunikation ist die jeweiligen Steuerung 6 mit der Netzüberwachungsvorrichtung 1,2 mittels einer Direktverdrahtung 12 verbunden. Es ist ebenso denkbar, dass die jeweilige Steuerung 6 mittels einer Busverbindung mit der Netzüberwachungsvorrichtung 1,2 zur Kommunikation verbunden ist.

Soll nun beispielsweise der Verbraucher 72 an das Versorgungsnetz zugeschaltet werden, so gibt die Steuerung 6 einen Schaltbefehl für das Schaltgerät 52 an die Netzüberwachungsvorrichtung 1 aus. Liegt eine normale Netzauslastung an der Netzüberwachungsvorrichtung 1 vor, so erfolgt keine Beeinflussung des Schaltbefehls. Die Netzüberwachungsvorrichtung 1 leitet den empfangenen Schaltbefehl unverändert an das Schaltgerät 52 weiter, so dass der von der Steuerung 6 erwünschte Schaltzustand des Schaltgerätes 52 und letztendlich der erwünschte Schaltzustand des Verbrauchers 72 herbeigeführt wird. Liegt hingegen eine erhöhte Netzauslastung des Versorgungsnetzes 4 am ersten Messpunkt 10 vor, so kann mittels der Netzüberwachungsvorrichtung 1 eine gezielte Beeinflussung des von ihrer Steuerung 6 empfangenen Schaltbefehls für das Schaltgerät 52 erfolgen. Seitens der Netzüberwachungsvorrichtung 1 kann insbesondere der empfangene Schaltbefehl abgewiesen werden, so dass es zu keiner Schaltzustandesänderung am zu schaltenden Schaltgerät 52 kommt, oder die Ausgabe des Schaltbefehls an das zu schaltende Schaltgerät 52 wird zeitlich verzögt. Bei dem zeitlichen Verzögern wird vorzugsweise das Schaltgerät 52 durch die Netzüberwachungsvorrichtung erst dann angesteuert, wenn sichergestellt ist, dass durch das Umsetzen des Schaltbefehls keine erhöhte Netzauslastung herbeigeführt wird. Der Verbraucher 72 wird somit erst bei vorliegen einer normalen Netzauslastung an des Versorgungsnetz 4 zugeschaltet. Zusätzlich kann beispielsweise die erste Netzüberwachungsvorrichtung 1 einen bereits am Versorgungsnetz 4 zugeschalteten entbehrbaren Verbraucher 71,73,74 durch eine Ansteuerung dessen Schaltgerät 51,81,82 vom Versorgungsnetz 4 nehmen, so dass die Netzauslastung reduziert wird. Zur Abschaltung des Verbrauchers 73, 74 kann ein entsprechender Schaltbefehl von der ersten Netzüberwachungsvorrichtung 1 an die zweite Netzüberwachungsvorrichtung 2 ausgegeben werden. Ist beispielsweise der Verbraucher 73 im Versorgungssystem verzichtbar (z.B. die Klimatisierung einer Werkshalle), so kann die erste Netzüberwachungsvorrichtung 1 ein Signal an die zweite Netzüberwachungsvorrichtung 2 ausgeben, so dass die zweite Netzüberwachungsvorrichtung das Schaltgerät 81 ansteuert, so dass der Verbraucher 73 vom Versorgungsnetz genommen wird. Daraufhin sinkt die Netzauslastung am ersten Messpunkt 10, so dass der zuzuschaltende Verbraucher 71 durch eine Ansteuerung des Schaltgerätes 51 von der ersten Netzüberwachungsvorrichtung an das Versorgungsnetz 4 zugeschaltet werden kann, ohne dass eine erhöhte Netzauslastung herbeigeführt wird.

Bei einer erhöhten Netzauslastung des Versorgungsnetzes 4 kann folglich gezielt ein empfangener Schaltbefehl beeinflusst werden, so dass ein Zuschalten eines Verbrauchers 71,72,73,74 an das Versorgungsnetz nicht umgesetzt oder zeitlich verzögert wird.

Zwischen der Steuerung 6 und der Netzüberwachungsvorrichtung 1,2 werden vorzugsweise folgende Informationen ausgetauscht:
a) von der Steuerung 6 zur Netzüberwachungsvorrichtung 1,2:
   - Schaltbefehle für die entsprechenden Schaltgeräte 51,52,81,82.
   - Maximale Netzauslastung des Versorgungsnetzes 4
   - Verbrauchswerte der Verbraucher 71,72,73,74 beim Anlauf und/oder beim Dauerbetrieb.
   - Priorität des Verbrauchers 71,72,73,74 um z.B. die Reihenfolge des Abschaltens/Zuschaltens des Verbrauchers 71,72,73,74 festzulegen.
b) Von der Netzüberwachungsvorrichtung 1,2 an die Steuerung 6:
   - Aktuell vorliegende Netzauslastung des Versorgungsnetzes 4.
   - Rückmeldung ob der empfangene Schaltbefehl umgesetzt wurde oder nicht. Insbesondere, ob der Verbraucher 71,72,73,74 durch sein zugehöriges Schaltgerät 51,52,81,82 zugeschaltet, verzögert oder nicht zugeschaltet wurde.

Die erste Netzüberwachungsvorrichtung 1 ist ebenso mittels einer separaten Leitung 12 mit der zweiten Netzüberwachungsvorrichtung verbunden. Über die Leitung 12 kann die erste Netzüberwachungsvorrichtung 1 folglich mit der zweiten Netzüberwachungsvorrichtung 2 kommunizieren.

Die Netzüberwachungsvorrichtungen 1,2 weisen jeweils eine Kommunikationsvorrichtung 9 auf. Mittels der Kommunikationsvorrichtung 9 kann eine Kommunikation zwischen der Netzüberwachungsvorrichtungen 1,2 und der zugehörigen Steuerung 6 erfolgen, so dass ein Schaltbefehl für ein anzusteuerndes Schaltgerät 51,52,81,82 von der Steuerung 6 an die Netzüberwachungsvorrichtungen 1,2 übertragbar ist. Ferner können mittels der jeweiligen Kommunikationsvorrichtung 9 Schaltbefehle an angeschlossene Schaltgeräte 51,52,81,82 von der Netzüberwachungsvorrichtungen 1,2 ausgegeben werden, so dass hierüber die über die Schaltgeräte 51,52,81,82 gesteuerten Verbraucher 71,72,73,74 gesteuert werden können.

Da die erste Netzüberwachungsvorrichtung 1 mit der zweiten Netzüberwachungsvorrichtung 2 verbunden ist, kann die vorliegende Netzauslastung am ersten Messpunkt 10 von der ersten Netzüberwachungsvorrichtung 1 an die zweite Netzüberwachungsvorrichtung 2 übertragen werden. Die zweite Netzüberwachungsvorrichtung 2 weist ebenso eine Messvorrichtung 3 auf, mittels welcher sie die vorliegende Netzauslastung des Versorgungsnetzes 4 an einem zweiten Messpunkt 11 ermitteln kann. Die zweite Netzüberwachungsvorrichtung 2 kann ebenso mittels ihrer Kommunikationsvorrichtung 9 untergeordnete Schaltgeräte 81,82 derart ansteuern, dass es zu keiner Überlastung des Versorgungsnetzes 4 kommt.

Die zweite Netzüberwachungsvorrichtung 2 kann das Schaltgerät 81,82 unmittelbar über die Leitung 12 (Direktverdrahtung) ansteuern. Die logische Auswertung der vorliegenden Netzauslastung und des empfangenen Schaltbefehles für das Schaltgerät 81,82 findet in der zweiten Netzüberwachungsvorrichtung 2 statt, so dass gezielt der von der Steuerung 6 empfangene Schaltbefehl für eines der Schaltgeräte 81,82 an das entsprechende Schaltgerät 81,82 weitergegeben oder beeinflusst werden kann.

Da an den Netzüberwachungsvorrichtungen 1,2 mehrere Schaltgeräte 51,52,81,82 angeschlossen sind, kann ein flexibles Reagieren bei hohen bzw. kritischen Netzauslastungen erfolgen kann.

Das Grundprinzip der Netzüberwachungsvorrichtung 1,2 lässt sich hierarchisch anwenden, d.h. eine im Versorgungsnetz 4 untergeordnete Netzüberwachungsvorrichtung (z.B. zweite Netzüberwachungsvorrichtung 2 gegenüber der ersten Netzüberwachungsvorrichtung 1) kann auch als schaltendes Gerät eines Verbrauchers interpretiert werden. Somit würden sich auch relativ große Versorgungsnetze 4 effizient mit dieser Technologie steuern lassen.

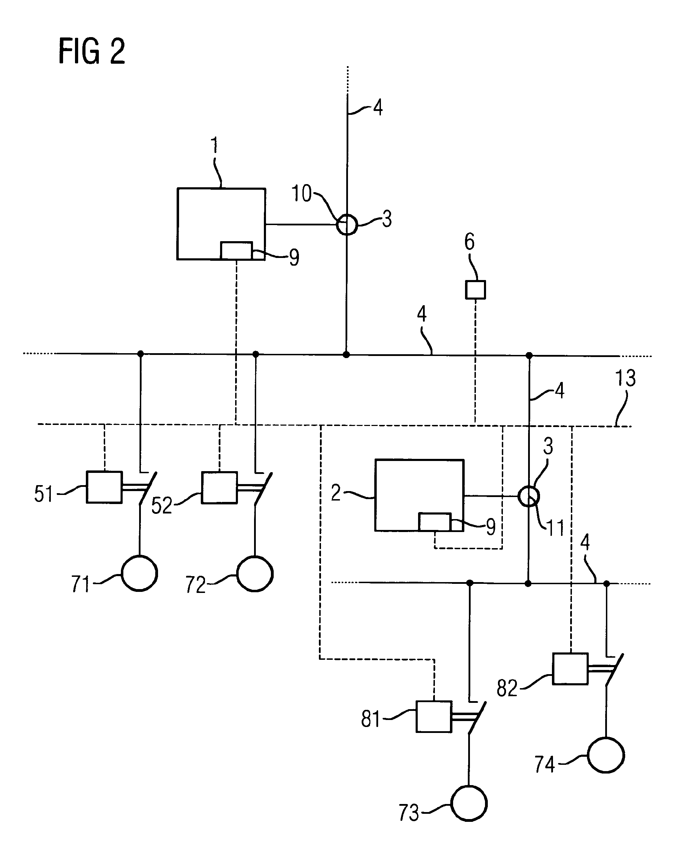

FIG 2 zeigt einen schematischen Aufbau eines Versorgungssystems mit einer ersten und einer zweiten Netzüberwachungsvorrichtung 1,2, wobei die Netzüberwachungsvorrichtungen 1,2 mittels eines Kommunikationsbusses 13 mit Schaltgeräten 51,52,81,82 verbunden sind. Der Unterschied zum in FIG 1 abgebildeten Versorgungssystem besteht darin, dass anstelle der Direktverdrahtung eine Kommunikation mittels eines Kommunikationsbusses 13 zwischen den Netzüberwachungsvorrichtungen 1,2 und den zugehörigen Schaltgeräten 51,52,81,82 und der Steuerung 6 erfolgt und dass die Netzüberwachungsvorrichtungen 1,2 lediglich mit einer Steuerung 6 verbunden sind. Die Steuerung 6 kann über den Kommunikationsbus 13 einen Schaltbefehl an die entsprechende Netzüberwachungsvorrichtung 1,2 ausgeben. Als Kommunikationsbus 13 wird beispielsweise Profibus, AS-Interface oder IO-Link verwendete.

## Patentansprüche

1. Netzüberwachungsvorrichtung (1,2) mit einer Kommunikationsvorrichtung (9), wobei über die Kommunikationsvorrichtung (9) die Netzüberwachungsvorrichtung (1,2) einen Schaltbefehl für ein Schaltgerät (51,52,81,82) empfangen und an das Schaltgerät (51,52,81,82) senden kann, wobei das Schaltgerät (51,52,81,82) die Energieversorgung eines an einem Versorgungsnetz (4) angebundenen Verbrauchers (71,72,73,74) steuern kann, wobei die Netzüberwachungsvorrichtung (1,2) dazu ausgebildet ist, mittels einer Messvorrichtung (3) eine vorliegende Netzauslastung des Versorgungsnetzes (4) zu ermitteln und in Abhängigkeit der ermittelten vorliegenden Netzauslastung einen empfangenen Schaltbefehl für das Schaltgerät (51,52,81, 82), welcher zu einem erhöhten Energieverbrauch am Versorgungsnetz (4) führen würde, zu beeinflussen, wobei das Schaltgerät (51,52,81,82) ein Schütz, ein Sanftstarter oder ein Frequenzumrichter ist.

2. Netzüberwachungsvorrichtung (1,2) nach Anspruch 1, wobei mittels der Kommunikationsvorrichtung (9) das Schaltgerät (51,52,81,82) unmittelbar steuerbar und/oder die ermittelte vorliegende Netzauslastung an das Schaltgerät (51,52,81,82) übertragbar ist.

3. Netzüberwachungsvorrichtung (1,2) nach einem der vorhergehenden Ansprüche, wobei die Netzüberwachungsvorrichtung (1,2) dazu ausgebildet ist, einen mit der Messvorrichtung (3) ermittelten Wert mit einem in der Netzüberwachungsvorrichtung (1,2) hinterlegten Referenzwert zu vergleichen, so dass die vorliegende Netzauslastung des Versorgungsnetzes (4) ermittelt werden kann.

4. Netzüberwachungsvorrichtung (1,2) nach einem der vorhergehenden Ansprüche, wobei die Netzüberwachungsvorrichtung (1,2) derart ausgebildet ist, dass bei vorliegen des Schaltbefehls für das Schaltgerät (51,52,81,82) ein weiteres mit der Netzüberwachungsvorrichtung (1,2) verbundene Schaltgerät (51,52, 81,82) derart angesteuert werden kann, dass der Energieverbrauch eines vom weiteren Schaltgerät (51,52,81,82) angesteuerten Verbrauchers (71,72,73,74) an dem Versorgungsnetz (4) reduziert wird.

5. Netzüberwachungsvorrichtung (1,2) nach einem der vorhergehenden Ansprüche, wobei in der Netzüberwachungsvorrichtung (1,2) Verbrauchswerte mehrerer Verbraucher (71,72,73,74) hinterlegt sind.

6. Netzüberwachungsvorrichtung (1,2) nach einem der vorhergehenden Ansprüche, wobei die Netzüberwachungsvorrichtung (1,2) mit einer weiteren Netzüberwachungsvorrichtung (1,2) kommunizieren kann und der weiteren Netzüberwachungsvorrichtung (1,2) die ermittelte vorliegende Netzauslastung des Versorgungsnetzes (4) übermitteln kann.

7. Speicherprogrammierbare Steuerung, welche eine Netzüberwachungsvorrichtung (1,2) nach einem der Ansprüche 1 bis 6 umfasst.

8. Versorgungssystem mit einem Versorgungsnetz (4), mindestens einem Schaltgerät (51,52) und einer Netzüberwachungsvorrichtung (1) nach einem der Ansprüche 1 bis 7, wobei die Netzüberwachungsvorrichtung (1) mittels der Messvorrichtung (3) die vorliegende Netzauslastung an einem ersten Messpunkt (10) des Versorgungsnetzes (4) ermitteln kann und in Abhängigkeit der ermittelten vorliegenden Netzauslastung am ersten Messpunkt (10) einen Schaltbefehl für das Schaltgerät (51,52), welcher zu einem erhöhten Energieverbrauch am Versorgungsnetz (4) führen würde, beeinflussen kann.

9. Versorgungssystem nach Anspruch 8, wobei das Schaltgerät (51,52) in Bezug auf den ersten Messpunkt (10) am Versorgungsnetz (4) nachgeschaltet ist.

10. Versorgungssystem nach einem der Ansprüche 8 bis 9, mit zwei am Versorgungsnetz (4) angeschlossenen Schaltgeräten (51,52), wobei die Netzüberwachungsvorrichtung (1) aufgrund eines Schaltbefehls für eines der Schaltgeräte (51,52) in Abhängigkeit der ermittelten vorliegenden Netzauslastung des Versorgungsnetzes (4) den vorliegenden Schaltzustand beider Schaltgeräte (51,52) beeinflussen kann.

11. Versorgungssystem nach einem der Ansprüche 8 bis 10, mit einer weiteren Netzüberwachungsvorrichtung (2) nach einem der Ansprüche 1 bis 7, welche an einem zweiten Messpunkt (11) des Versorgungsnetzes (4) die vorliegende Netzauslastung ermitteln kann.

12. Verfahren zum Ansteuern eines Schaltgerätes (51,52, 81, 82), welches die Energieversorgung eines an einem Versorgungsnetz (4) angebundenen Verbrauchers (71,72,73,74) steuern kann, wobei eine Netzüberwachungsvorrichtung (1,2) mittels einer Messvorrichtung (3) eine vorliegende Netzauslastung des Versorgungsnetzes (4) ermittelt und in Abhängigkeit der ermittelten vorliegenden Netzauslastung einen empfangenen Schaltbefehl für das Schaltgerät (51,52,81,82), welcher zu einem erhöhten Energieverbrauch am Versorgungsnetz (4) führen würde, beeinflusst, wobei das Schaltgerät (51,52,81,82) ein Schütz, ein Sanftstarter oder ein Frequenzumrichter ist.

13. Verfahren nach Anspruch 12, wobei aufgrund des Schaltbefehls für das Schaltgerät (51,52,81,82) ein weiteres mit der Netzüberwachungsvorrichtung (1,2) verbundene Schaltgerät (51,52,81,82) derart angesteuert wird, dass der Energieverbrauch eines vom weiteren Schaltgerät (51,52,81,82) angesteuerten Verbrauchers (71,72,73,74) an dem Versorgungsnetz (4) reduziert wird.

## Claims

1. Network monitoring device (1, 2) having a communication device (9), wherein the network monitoring device (1, 2) can receive a switch command for a switch unit (51, 52, 81, 82) via the communication device (9) and transmit same to the switch unit (51, 52, 81, 82), wherein the switch unit (51, 52, 81, 82) can control the energy supply of a consumer (71, 72, 73, 74) connected to a supply network (4), wherein the network monitoring device (1, 2) is designed to determine a network utilisation of the supply network (4) by means of a measurement device (3) and, in dependence on the determined network utilisation, to influence a received switch command for the switch unit (51, 52, 81, 82) which would lead to increased energy consumption on the supply network (4), wherein the switch unit (51, 52, 81, 82) is a contactor, a soft starter or a frequency converter.

2. Network monitoring device (1, 2) according to claim 1, wherein the communication device (9) is able to control the switch unit (51, 52, 81, 82) directly and/or to transmit the determined network utilisation to the switch unit (51, 52, 81, 82).

3. Network monitoring device (1, 2) according to one of the preceding claims, wherein the network monitoring device (1, 2) is designed to compare a value determined by the measurement device (3) with a reference value stored in the network monitoring device (1, 2) so that the network utilisation of the supply network (4) can be determined.

4. Network monitoring device (1, 2) according to one of the preceding claims, wherein the network monitoring device (1, 2) is designed such that, when the switch command for the switch unit (51, 52, 81, 82) is present, a further switch unit (51, 52, 81, 82) connected to the network monitoring device (1, 2) can be actuated such that the energy consumption of a consumer (71, 72, 73, 74) actuated by the further switch unit (51, 52, 81, 82) on the supply network (4) will be reduced.

5. Network monitoring device (1, 2) according to one of the preceding claims, wherein consumption figures for several consumers (71, 72, 73, 74) are stored in the network monitoring device (1, 2).

6. Network monitoring device (1, 2) according to one of the preceding claims, wherein the network monitoring device (1, 2) can communicate with a further network monitoring device (1, 2) and can transmit the determined network utilisation of the supply network (4) to the further network monitoring device (1, 2).

7. Programmable logic controller comprising a network monitoring device (1, 2) according to one of claims 1 to 6.

8. Supply system with a supply network (4), at least one switch unit (51, 52) and a network monitoring device (1) according to one of claims 1 to 7, wherein the network monitoring device (1) can determine the network utilisation at a first measuring point (10) of the supply network (4) by means of the measurement device (3) and, in dependence on the determined network utilisation at the first measuring point (10), can influence a switch command for the switch unit (51, 52), which would lead to increased energy consumption on the supply network (4).

9. Supply system according to claim 8, wherein the switch unit (51, 52) is connected downstream in relation to the first measuring point (10) on the supply network (4).

10. Supply system according to one of claims 8 to 9, with two switch units (51, 52) connected to on the supply network (4), wherein, on the basis of a switch command for one of the switch units (51, 52), the network monitoring device (1) can, in dependence on the determined network utilisation of the supply network (4), influence the switching status of the two switch units (51, 52).

11. Supply system according to one of claims 8 to 10, with a further network monitoring device (2) according to one of claims 1 to 7, which is able to determine the network utilisation at a second measuring point (11) of the supply network (4).

12. Method for actuating a switch unit (51, 52, 81, 82), which can control the energy supply of a consumer (71, 72, 73, 74) connected to a supply network (4), wherein a network monitoring device (1, 2) determines a network utilisation of the supply network (4) by means of a measurement device (3) and, in dependence on the determined network utilisation, influences a received switch command for the switch unit (51, 52, 81, 82), which would lead to increased energy consumption on the supply network (4), wherein the switch unit (51, 52, 81, 82) is a contactor, a soft starter or a frequency converter.

13. Method according to claim 12, wherein on the basis of the switch command for the switch unit (51, 52, 81, 82), a further switch unit (51, 52, 81, 82) connected to the network monitoring device (1, 2) is actuated such that the energy consumption of a consumer (71, 72, 73, 74) actuated by the further switch unit (51, 52, 81, 82) on the supply network (4) is reduced.

## Revendications

1. Dispositif (1, 2) de contrôle de réseau comprenant un dispositif (9) de communication, dans lequel, par le dispositif (9) de communication, le dispositif (1, 2) de contrôle du réseau peut recevoir une instruction de commutation pour un appareil (51, 52, 81, 82) de commutation et l'envoyer à l'appareil (51, 52, 81, 82) de commutation, l'appareil (51, 52, 81, 82) de commutation pouvant commander l'alimentation en énergie d'un utilisateur (71, 72, 73, 74) reliée à un réseau (4) d'alimentation, le dispositif (1, 2) du contrôle du réseau étant constitué pour, au moyen d'un dispositif (3) de mesure, déterminer l'utilisation présente du réseau (4) d'alimentation et, en fonction de l'utilisation présente déterminée du réseau, influencer une instruction de commutation reçue pour l'appareil (51, 52, 81, 82) de commutation, qui conduirait à une consommation accrue d'énergie au réseau (4) d'alimentation, l'appareil (51, 52, 81, 82) de commutation étant un contacteur, un starter doux ou un convertisseur de fréquence.

2. Dispositif (1, 2) de contrôle de réseau suivant la revendication 1, dans lequel, au moyen du dispositif (9) de communication, l'appareil (51, 52, 81, 82) de commutation peut être commandé directement et/ou l'utilisation présente déterminée du réseau peut être transmise à l'appareil (51, 52, 81, 82) de commutation.

3. Dispositif (1, 2) de contrôle de réseau suivant l'une des revendications précédentes, dans lequel le dispositif (1, 2) de contrôle du réseau est constitué pour comparer une valeur déterminée par le dispositif (3) de mesure à une valeur de référence mémorisée dans le dispositif (1, 2) de contrôle du réseau de manière à pouvoir déterminer l'utilisation présente du réseau (4) d'alimentation.

4. Dispositif (1, 2) de contrôle de réseau suivant l'une des revendications précédentes, dans lequel le dispositif (1, 2) de contrôle du réseau est constitué de manière à ce qu'en présence de l'instruction de commutation pour l'appareil (51, 52, 81, 82) de commutation, un autre appareil (51, 52, 81, 82) de commutation relié au dispositif (1, 2) de contrôle du réseau puisse être commandé de façon à réduire sur le réseau (4) d'alimentation la consommation d'énergie d'un utilisateur (71, 72, 73, 74) commandé par l'autre appareil (51, 82, 81, 82) de commutation.

5. Dispositif (1, 2) de contrôle de réseau suivant l'une des revendications précédentes, dans lequel les valeurs de consommation de plusieurs utilisateurs (71, 72, 73, 74) sont mémorisées dans le dispositif (1,2) de contrôle du réseau.

6. Dispositif (1, 2) de contrôle de réseau suivant l'une des revendications précédentes, dans lequel le dispositif (1, 2) de contrôle du réseau peut communiquer avec un autre dispositif (1, 2) de contrôle du réseau et peut transmettre à l'autre dispositif (1, 2) de contrôle du réseau l'utilisation présente déterminée du réseau (4) d'alimentation.

7. Automate programmable qui comprend un dispositif (1, 2) de contrôle de réseau suivant l'une des revendications 1 à 6.

8. Système d'alimentation comprenant un réseau (4) d'alimentation au moins un appareil (51, 52) de commutation et un dispositif (1) de contrôle de réseau suivant l'une des revendications 1 à 7, dans lequel le dispositif (1) de contrôle du réseau peut, au moyen du dispositif (3) de mesure, déterminer l'utilisation présente du réseau en un premier point (10) de mesure du réseau (4) d'alimentation et peut, en fonction de l'utilisation présente déterminée du réseau, influencer au premier point (10) de mesure sur une instruction de commutation pour l'appareil (51, 52) de commutation qui conduirait à une consommation d'énergie accrue au réseau (4) d'alimentation.

9. Système d'alimentation suivant la revendication 8, dans lequel l'appareil (51, 52) de commutation est monté en aval du premier point (10) de mesure sur le réseau (4) d'alimentation.

10. Système d'alimentation suivant l'une des revendications 8 à 9, comprenant deux appareils (51, 52) de commutation raccordés au réseau (4) d'alimentation, le dispositif (1) de contrôle du réseau pouvant, sur la base d'une instruction de commutation pour l'un des appareils (51, 52) de commutation, influer en fonction de l'utilisation présente déterminée du réseau (4) d'alimentation sur l'état de commutation présente des deux appareils (51, 52) de commutation.

11. Système d'alimentation suivant l'une des revendications 8 à 10, comprenant un autre dispositif (2) de contrôle du réseau suivant l'une des revendications 1 à 7 qui peut, en un deuxième point (11) de mesure du réseau (4) d'alimentation, déterminer l'utilisation présente du réseau.

12. Procédé de commande d'un appareil (51, 52, 81, 82) de commutation qui peut commander l'alimentation en énergie d'un utilisateur (71, 72, 73, 74) relié à un réseau (4) d'alimentation, un dispositif (1, 2) de contrôle du réseau déterminant, au moyen d'un dispositif (3) de mesure, une utilisation présente du réseau (4) d'alimentation et, en fonction de l'utilisation présente déterminée du réseau, influant sur une instruction de commutation reçue pour l'appareil (51, 52, 81, 82) de commutation, qui conduirait à une consommation accrue d'énergie au réseau (4) d'alimentation, l'appareil (51, 52, 81, 82) de commutation étant un contacteur, un starter doux ou un convertisseur de fréquence.

13. Procédé suivant la revendication 12, dans lequel, sur la base de l'instruction de commutation pour l'appareil (51, 52, 81, 82) de commutation, on commande un autre appareil (51, 52, 81, 82) de commutation relié au dispositif (1, 2) de contrôle de réseau de manière à réduire au réseau (4) d'alimentation la consommation d'énergie d'un utilisateur (71, 72, 73, 74) commandé par l'autre appareil (51, 52, 81, 82) de commutation.
